Europäisches Patentamt

European Patent Office

Office européen des brevets

(11) Publication number: **0 092 289**
**B1**

## EUROPEAN PATENT SPECIFICATION

(45) Date of publication of patent specification: **11.10.89**

(51) Int. Cl.⁴: **G 11 B 15/467, H 04 N 5/783**

(21) Application number: **83200549.0**

(22) Date of filing: **18.04.83**

(54) Apparatus for reproducing video signals with a speed which deviates from a nominal speed.

(30) Priority: **19.04.82 NL 8201614**

(43) Date of publication of application:
**26.10.83 Bulletin 83/43**

(45) Publication of the grant of the patent:
**11.10.89 Bulletin 89/41**

(84) Designated Contracting States:
**AT BE DE FR GB IT**

(56) References cited:
**DE-A-3 139 810**
**FR-A-2 406 864**
**GB-A-2 013 939**
**GB-A-2 095 436**
**US-A-4 297 733**
**US-A-4 315 283**

(73) Proprietor: **N.V. Philips' Gloeilampenfabrieken**
**Groenewoudseweg 1**
**NL-5621 BA Eindhoven (NL)**

(72) Inventor: **Spiero, Richard Cees**
**c/o INT. OCTROOIBUREAU B.V. Prof. Holstlaan 6**
**NL-5656 AA Eindhoven (NL)**

(74) Representative: **van der Kruk, Willem Leonardus**
**et al**
**INTERNATIONAAL OCTROOIBUREAU B.V. Prof.**
**Holstlaan 6**
**NL-5656 AA Eindhoven (NL)**

Courier Press, Leamington Spa, England.

## Description

The invention relates to an apparatus for reproducing video signals by a rotatable head, which video signals in combination with pilot signals have been recorded on a record carrier in the form of a tape in mutually parallel tracks which are inclined relative to the longitudinal axis of the record carrier, which apparatus comprises tracking-error detection means for detecting the instantaneous deviation of the read head relative to the centre of a track to be followed, a reference-signal generator for generating reference signals, the tracking-error detection means comparing a reference signal with reproduced pilot signals in order to generate a tracking-error signal which is a measure of the deviation of the read head relative to the centre of the track corresponding to the generated reference signal, said reference signals and pilot signals being such that a track is distinguishable within cycles of at least three tracks, and a tape-transport control loop for controlling the tape transport as a function of said tracking-error signal.

Such an apparatus is *inter alia* known from United States Patent Specification No. 4,297,733, herewith incorporated by reference. The known apparatus employs long-wave track-sensing signals recorded in the tracks, the head reading the track-sensing signals produced by crosstalk from the two adjacent tracks during the read-out of a specific track. The reference signals are mixing signals which upon mixing with the signals read by the head and containing the two crosstalk signals result in mixing products which are filtered out to form a tracking-error signal. These mixing signals changing from track to track over a cycle of four tracks. Other methods are also known. As an example, consecutive tracks may be distinguished for the purpose of deriving a tracking-error signal by recording track-sensing signals at different locations in consecutive tracks. The said reference signals are then time-reference signals for defining time windows by means of which said tracking-sensing signals can be identified and read. Alternatively, phase-reference signals may be used or combinations of the said signal types.

During playback with the nominal tape speed the tracking signal is utilized in order to ensure that the head follows the track. This may be effected by controlling the head position by means of actuators or by controlling the tape-transport speed.

During playback with a speed which deviates from the nominal tape speed, tracks are read several times (slow motion or still pictures) or tracks are skipped (fast motion). For this purpose said reference signals are generated in a specific pattern from which reference signals may be repeated in the case of slow-motion reproduction and reference signals may be skipped in the case of fast-motion. When actuators are used the head always follows the track corresponding to the instantaneously generated reference signal. If the method of controlling the tape-transport speed is used, the head will not follow the track exactly, because such a control system is much too slow for this, but scans the track obliquely. However, the control system does ensure that on the average the head follows the track which corresponds to the generated tracking signal.

When actuators are used any deviating tape transport speed is possible, in principle, without problems. The actuators ensure a correct tracking regardless of the tape-transport speed. When a tape-transport speed control system is used for tracking control in fact only a limited number of speeds which deviate from the nominal tape-transport speed are possible. For example, playback with a speed which is two times as slow or two times as fast is possible by repeating each reference signal twice or by skipping every second reference signal. A limited number of multiples or submultiples of the nominal transport speed are also possible. As an example, playback with a speed which is two and a half times as slow is possible by alternately repeating the reference signals two times and three times.

It is an object of the invention to provide an apparatus of the type mentioned in the opening paragraph, which in principle permits reproduction with any tape-transport speed which deviates from the nominal speed, the tape-transport speed being controlled as a function of the tracking signal.

To this end the invention is characterized in that for reproducing the information in the tracks on the record carrier with a speed which deviates from the nominal speed, at which deviating speed the read head follows a path on the record carrier which does not extend parallel to the recorded tracks, the reference signal generator is adapted to generate a predetermined sequence of reference signals, which predetermined sequence is so selected that the reference signals are switched so that they continuously correspond to the pilot signals of those tracks on which the head will be situated in the case of a rectilinear motion of the head in a direction which is inclined relative to the recorded track direction, and which corresponds to the direction associated with said deviating speed.

The step in accordance with the invention permits a smooth transition from a tape position corresponding to a specific track to a tape position corresponding to a following track by gradually shifting the instant of track change, so that any desired tape-transport speed is possible while maintaining the tape-transport speed control in response to the tracking-error signal.

In order to generate the desired pattern of reference signals in a simple manner the apparatus in accordance with the invention may be further characterized in that at a speed which deviates from the nominal scanning speed the sequence of reference signals is obtained in response to pulses if a first frequency which corresponds to reproduction with the nominal playing speed and which switches the reference signals in a forward order and additional switching is effected by pulses with a second frequency.

In this respect it is advantageous that the first frequency corresponds to the number of tracks scanned per second at the nominal playing speed.

In particular for a slow-motion reproduction of the recorded pictures this embodiment may be further characterized in that for a speed less then nominal speed the second frequency switching is effected in a backward order compared with the direction in which switching is effected with the first frequency. This embodiment may be further characterized in that it comprises a counter, to which counting signals of the said frequencies are applied. For fast-motion reproduction of the recorded pictures this embodiment may be further characterized in that for a speed greater than the nominal speed switching forward is effected with the second frequency.

During the "still picture" scanning mode the position of the path followed by the head relative to the tracks determines the location of the reproduced picture. In order to ensure that these interference zones are disposed at a specific location in the picture where they are at least annoying, the preferred embodiment of the apparatus in accordance with the invention may be further characterized in that the apparatus comprises a phase detector for detecting the phase relationship between the signals of the first and the second frequency during reproduction with a tape-transport speed equal to zero, in order to control the point where the head each time changes to another track. This last-mentioned embodiment may be further characterized in that the apparatus further comprises a variable-frequency oscillator for generating a signal of the second frequency, which variable oscillator, together with the phase detector, is arranged in a phase-locked loop during reproduction with a tape-transport speed equal to zero.

As a result of this step the oscillator frequency is locked to the signal of the first frequency, so that the "still picture" mode can always be obtained within a specific range.

This preferred embodiment may be further characterized in that the apparatus comprises a control-signal generator, for example a potentiometer, for generating a control signal for the variable oscillator and, this control-signal generator is moreover combined with the tape-transport control loop as a feed-forward control.

The invention will now be described in more detail, by way of example, with reference to the drawing. In the drawing:

Figure 1 is the circuit diagram of an apparatus to which the inventive principle may be applied.

Figure 2 shows the tracking-error signal $V_o$ as a function of the tracking error,

Figure 3 shows the paths of a head across the recorded track pattern at a scanning speed which is 1/3 of the nominal speed,

Figure 4 shows some signal waveforms appearing in the apparatus shown in Figure 1 in the case of the scanning cycle shown in Figure 3,

Figure 5 shows the pattern of reference signals to be generated at the various scanning speeds, and

Figure 6 shows a version of the reference signal generator 1 (Figure 1) embodying the inventive principle.

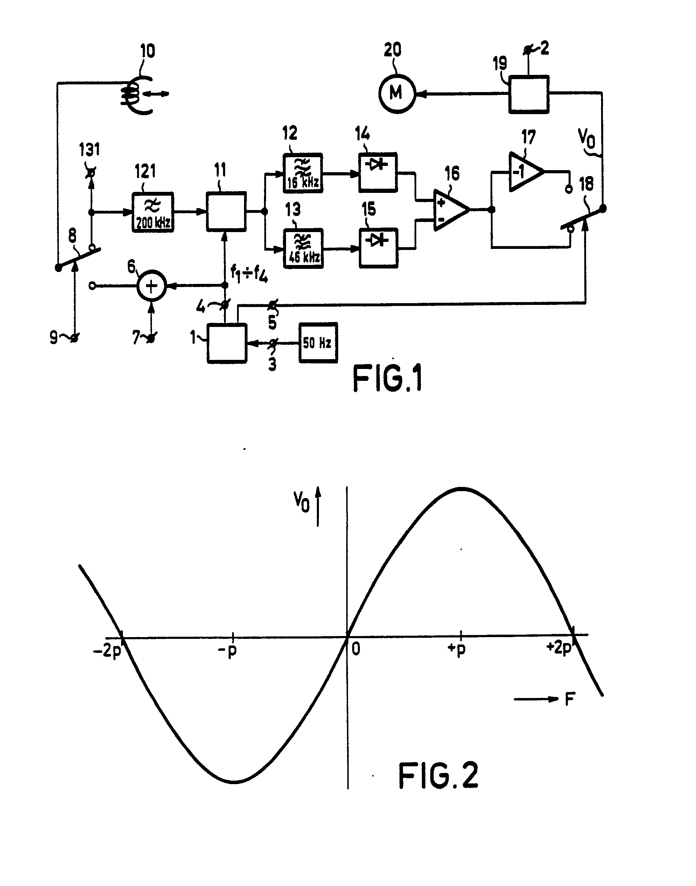

Figure 1 is the circuit diagram of an apparatus to which the inventive principle may be applied. This apparatus is in conformity with the aforementioned United States Patent Specification No. 4,297,733 (PHN 8728). The principle in accordance with the invention will be described in the basis of the tracking method described in this reference, but it will be appreciated that other tracking methods are possible to which the inventive principle may be applied.

The apparatus comprises a reference signal generator 1 which generates a specific pattern of reference signals of different frequencies $f_1$, $f_2$, $f_3$ and $f_4$, for example 102, 118, 164 and 148 kHz respectively. These signals are applied to an adder 6 to be added to a video signal applied to an input 7 during recording, which video signal is transferred to a write/read head 10 via a switch 8, which is actuated in accordance with the "recording" and "playback" modes. In a two-head recorder the write/read head in fact comprises two heads which are alternately used. Moreover, the output signal of the reference-signal generator is applied to a mixing stage 11 which receives the read-out reference signals of the frequencies $f_1$, $f_2$, $f_3$ and $f_4$ via a low-pass filter 12 and the switch 8 in the "playback" mode. The read-out video signal is available on an output 131 between the switch 8 and the filter 12.

The recorded pattern of frequencies—at least in the present apparatus—is such that the frequency difference between the crosstalk signal from one adjacent track and a mixing signal, which in the present apparatus is identical to the reference signal recorded in the track to be followed, is equal to a specific frequency (in the present example 16 kHz) and the frequency difference between the crosstalk signal from the other adjacent track and the mixing signal is equal to another specific frequency (in the present example 46 kHz). The situation is now such that when a specific track is followed one difference frequency corresponds to one adjacent track and the other difference frequency to the other adjacent track, and the other way around when a following track is to be scanned.

In the apparatus shown in Figure 1 the foregoing is achieved in that the output signal of the mixing stage 11, which signal comprises components of the said difference frequencies, is applied in parallel to the band-pass filters 12 and 13 which have pass-bands around the frequencies 16 and 46 kHz respectively. The amplitude of the output signals of the filters 12 and 13 is determined by means of amplitude detectors 14 and 15 respectively and the difference of these amplitudes is determined by means of the differential amplifier 16. An inverter 17 and a switch 18 cancel the previously mentioned change of the difference frequencies associated with the respective adjacent tracks upon a change from one track to be followed to another track to be followed, for which purpose the switch 18 is also controlled by the reference-signal generator 1. The amplitude of the signal $V_o$ appearing behind the switch 18 is then a measure of the deviation of the head 10 relative to the centre of the track to be followed and the polarity of the signal $V_o$ indicates the direction of the tracking error. Ths tracking-error signal $V_o$ is applied to a tape-transport control circuit 19 which controls a tape-transport motor 20.

Figure 2 shows the tracking-error signal $V_0$ as a function of the tracking error F which is plotted along the associated axis in relation to the track pitch p. This tracking-error signal $V_o$ is periodic over four tracks.

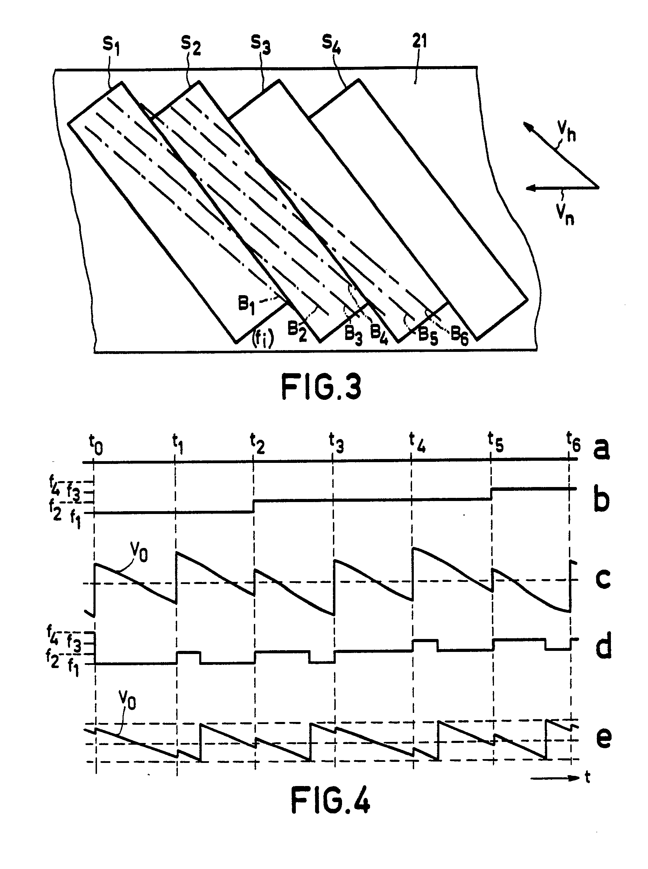

Figure 3 schematically shows a recording tape 21 and the video signals recorded on this tape in the form of tracks, of which four consecutive tracks $S_1$, $S_2$, $S_3$ and $S_4$ are shown. These tracks also contain the reference signals of the frequencies $f_1$, $f_2$, $f_3$ and $f_4$, respectively, which cycle recurs periodically when video pictures are recorded. During normal playback the control system shown in Figure 1 ensures that the head 10 follows the tracks of $S_1$, $S_2$, $S_3$ and $S_4$ in this order, for which purpose the head is moved with a velocity $V_h$, which is vectorially represented in Figure 3, and the tape is moved with the vectorially represented velocity $V_n$.

For reproducing pictures in a fast-motion, slow-motion or even in the still and reverse modes the tape transport speed $V_n$ may be changed. In addition to the speed with the pictures corresponding to the consecutive tracks are reproduced the direction in which the head 10 scans the tracks is then changed. This will be explained by describing the situation which occurs when tape transport is effected with 1/3 of the nominal speed $V_n$, Figure 4 diagrammatically representing the consecutive reference signals. Figure 4a represents the time axis, Figure 4b the sequence of the reference signals to be generated, which reference signals are the mixing signals for the mixing stage 11 if these reference signals are generated in a correspondingly delayed cycle, Figure 4c represents the tracking-error signal then produced, Figure 4d represents the sequence of the reference signals when the inventive principle is applied, and Figure 4e represents the resulting tracking-error signal $V_o$.

At the speed 1/3 $V_n$ the broken lines in Figure 3 represent the centres of six paths $B_1$ to $B_6$ consecutively followed by the head 10. These paths $B_1$ to $B_6$ deviate from the track direction and extend across more than one track, scanning of these paths being started consecutively at the instants $t_0$ to $t_5$ indicated in Figure 4. In the situation shown it is assumed that at the instant $t_0$ a path is started which intersects the central axis of the track $S_1$ halfway. In order to follow this path $B_1$ a reference signal $f_1$ is generated. The track position in the situation shown in then such that the deviation F (Figure 2) is approximately ½p at the beginning and at the end. The control signal $V_o$ then varies as shown in Figure 4c. At the instant $t_1$ the scanning of path $B_2$ is started, which path is shifted by 1/3p relative to the path $B_1$. At the beginning of the path $B_1$ the track deviation has increased (approximately 1p in the present case) so that the signal $V_o$ at the instant $t_1$ has also increased. At the instant $t_2$ the reference signal changes and during the next three scans a reference signal of the frequency $f_2$ is generated until at the instant $t_5$ at the beginning of the path $B_6$ the frequency of the reference signal changes to the frequency $f_3$.

Depending on the scanning speed the paths B will extend across several tracks and the maximum of the control signal $V_o$ will be equal to the maximum shown in Figure 2 for a track deviation equal to 1p. The tape-transport speed will be controlled in such a way that the d.c. level of the signal $V_0$ remains substantially zero.

In accordance with the invention a more flexible tape-transport control is obtained when the pattern of frequencies $f_1$ to $f_n$ is such that when the (nominal) path B is to change to another track the frequency changes accordingly. For example, the path $B_2$ commencing at the instant $t_1$ will intersect the boundary between the tracks $S_1$ and $S_2$ after approximately one third of its length. Accordingly, the reference signal frequency will also change at 1/3 of the time interval between the instants $t_1$ and $t_2$. The pattern of frequency changes thus required is as shown in Figure 4d, whilst Figure 4e shows the corresponding tracking-error signal $V_0$. In the case of a correct tape-transport speed this error signal has a maximum value which corresponds to a track deviation equal to ½p, because each time when a path B changes to another track the frequency of the reference signal changes also.

A comparison of Figure 4e with Figure 4c clearly shows that the error signal shown in Figure 4e varies far more gradually and has a smaller amplitude than the error signal shown in Figure 4c.

The desired pattern of reference signals can be generated very simply when switching is effected in the sequence $f_1$, $f_2$, $f_3$, $f_4$, $f_1$ . . . and so on with a first frequency $f_f$ which is equal to the nominal number of tracks to be followed per second, in the present example 50 Hz, in addition to which switching back is effected with a frequency $f_c$ and switching forward with a frequency $f_c'$. For the slow-motion and reverse modes this means that:

$$v/v_n = (f_f - f_c)/f_f$$

where v is the playback speed and $v_n$ the nominal playback speed. For example, for $f_c = 60$ Hz ($f_f = 50$ Hz) the speed for the reverse mode is then 1/5 of the nominal speed. For the fast-motion mode the following is valid:

$$v/v_n = (f_f + f_c')/f_f$$

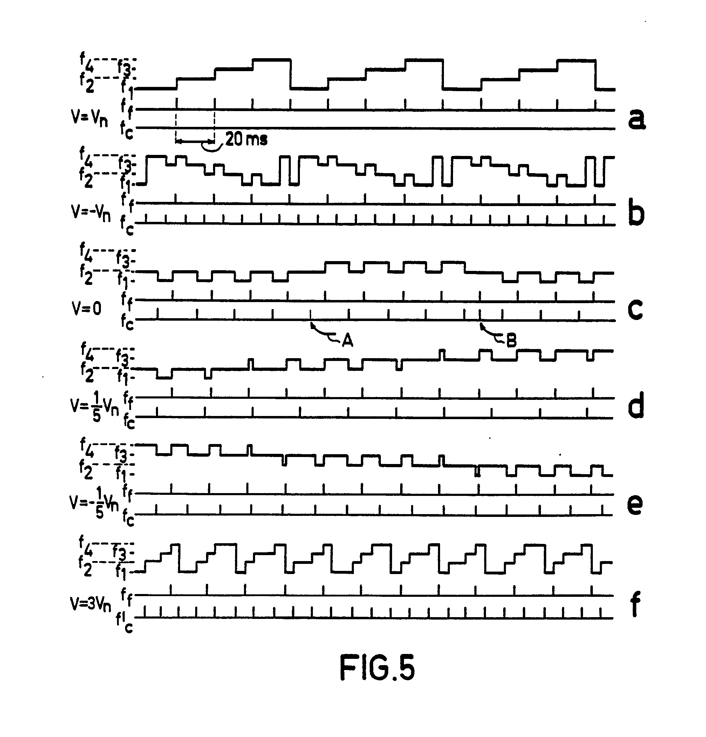

Figure 5 shows the switching instants as pulse trains of the frequencies $f_f$ and $f_c$ (or $f_c'$) and also shows the corresponding patterns of reference signals. The diagrams a to f in this order correspond to the speeds $v/v_n = +\frac{1}{2}$, $-1$, $0$, $+1/5$, $-1/5$ and $+3$. Diagram c shows that at the instants A and B respectively a forward and a backward jump by one picture respectively are obtained by suppressing one pulse of the sequence of the frequency $f_c$ and by adding one additional pulse to the sequence of the frequency $f_c$ respectively.

The patterns of reference signals as shown in Figure 5 can be generated in the reference-signal generator 1 (Figure 1).

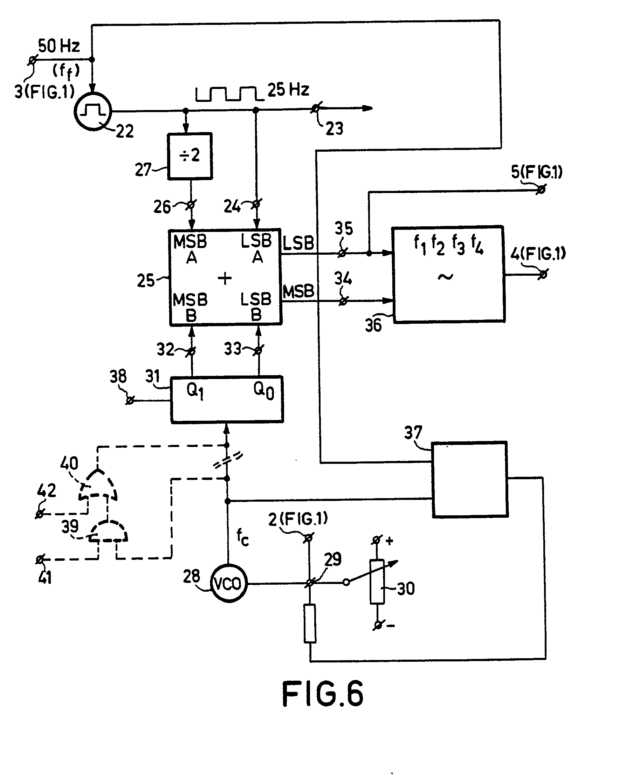

Figure 6 shows a preferred embodiment of such a reference-signal generator. It comprises an input 3 for receiving pulses having a repetition frequency $f_f$ (in the present example 50 Hz) from which a symmetrical pulse-shaped signal of a frequency of 25 Hz is derived in a pulse shaper 22. This 25-Hz signal is available on an output 23 and may serve as switching signal for the head change in a two-head helical-scan video recorder. The 25-Hz signal is applied to an input 24 of a logic adder circuit 25, which input 24 constitutes the input for the least-significant bit of the two-bit input 24—26. The 25-Hz signal is applied to the input 26 for the most-significant bit via a divide-by-two divider 27. Consequently, the decimal value of the signal pair on inputs 24 and 26, which pair forms a two-bit binary signal, varies from 0 to 3 in a rhythm equal to $f_c$ (=50 Hz).

The circuit arrangement shown in Figure 6 further comprises a pulse generator 28 which is voltage-controlled via an input 29 and which supplies pulses having a repetition frequency equal to $f_c$, which repetition frequency is determined by the voltage on the wiper of a potentiometer 30. A two-bit down-counter 31 converts the pulses from the oscillator 28 into a two-bit binary code which is available on outputs $Q_0$ and $Q_1$ of the down-counter 31, which outputs are connected to the inputs 32 and 33 of the adder 25. Thus, the adder 25 operates in a rhythm which is determined by the frequency difference $f_f - f_c$. The adder 25 comprises two outputs 34 and 35 on which the count appears as a two-bit binary code and which varies decimally from 0 to 3 in a rhythm equal to $f_f - f_c$. The outputs 34 and 35 are connected to a frequency generator 36 which in response to the count on said outputs generates the frequency $f_1$, $f_2$, $f_3$ or $f_4$, so that the desired pattern of reference signals appear on an output 4 of this generator 36.

The least-significant bit on output 35 of the adder 25 always changes in synchronism with the changes of the frequencies $f_1$ to $f_4$. By applying this least-significant bit to an output 5 a signal for actuating the switch 18 (Figure 1) is obtained.

In the "still-picture" mode as shown in diagrm 5c the pulses of the frequency $f_c$ and the corresponding frequency changes in the reference signal determine the location where the corresponding path B followed by the head (see Figure 3) intersects the boundary between two adjacent tracks. As the tracking mechanism controls the tape transport in such a way that the average value of the signal $V_0$ (as shown in Figure 4e) becomes zero, this means that the track change is controlled towards the centre of the track, which is favourable because the corresponding interference zone in the picture is then least annoying. However, this applies only if the frequency $f_c$ is exactly equal to the frequency $f_f$, which is never possible in practice when the frequency $f_c$, as is shown in Figure, is adjusted by means of a manually controlled potentiometer which would give rise to a slowly advancing picture but also to a moving interference zone. In the embodiment shown in Figure 6 this problem is precluded by arranging the oscillator 28, in the present case with the frequency $f_f$, in a phase-locked loop. For this purpose the phase difference between the signals of the frequencies $f_c$ and $f_f$ (or between other corresponding signals) is measured by means of a phase detector 37 and the control voltage on input 29 of the oscillator 28 is corrected by means of this difference.

In Figure 6 point 29 is connected to an output 2. This output 2 is connected to a corresponding input 2 in the circuit arrangement shown in Figure 1 in order to provide a feed-forward control for the tape-transport speed control circuit 19. This control circuit 19 is then preset to the frequency $f_c$ in conformity with the setting of the oscillator 28.

Figure 5f shows the situation for a playback speed which is higher than the nominal playback speed. For this purpose it is necessary that in the frequency cycle $f_1$, $f_2$, $f_3$ and $f_4$ switching is effected with the frequencies $f_f$ and $f_c'$. This may be achieved by using a reversible up/down-counter having a switching input 38 for the counter 31.

The diagram in Figure 5c shows that it is possible to switch one "picture forward" or one "picture backward" by suppressing a pulse of the sequence of the frequency $f_c$ or by adding a pulse to this sequence. In the circuit arrangement shown in Figure 6 this may be achieved by, for example, suitably modifying the adder 25 or by suppressing a pulse in the output signal of the oscillator 28 or adding a pulse to this output signal, for example by means of the gates 39 and 40 and inputs 41 and 42 as indicated by the broken lines.

In the "recording" mode the reference signal pattern shown in diagram 5a must be generated in the circuit arrangement shown in Figure 1 in the same way as during normal playback, which pattern is obtained for $f_c = 0$, which may be achieved, for example, by controlling the oscillator 28 to obtain the frequency $f_c = 0$ or by providing a disabling facility at a suitable location, such as in the counter 31.

**Claims**

1. An apparatus for reproducing video signals by a rotatable head (10), which video signals in combination with pilot signals have been recorded on a record carrier in the form of a tape in mutually parallel tracks (S1—S4) which are inclined relative to the longitudinal axis of the record carrier, which apparatus comprises tracking-error detection means for detecting the instantaneous deviation of the read head relative to the centre of a track to be followed, a reference-signal generator (1—7) for generating reference signals ($f_1$—$f_4$) the tracking-error detection means comparing a reference signal with reproduced pilot signals, in order to generate a tracking-error signal ($V_o$) which is a measure of the deviation of the read head relative to the centre of the track corresponding to the generated reference signal, said reference signals and pilot signal being such that a track is distinguishable within cycles of at least three tracks, and a tape-transport control loop (19, 20) for controlling the tape transport as a function of said tracking-error signal, characterized in that for reproducing the information in the tracks on the record carrier with a speed (V) which deviates from the nominal speed ($V_n$), at which deviating speed the read head follows a path on the record carrier which does not extend parallel to the recorded tracks, the reference-signal generator is adapted to generate a predetermined sequence of reference signals, which predetermined sequence is so selected that the reference signals are switched so that they continuously correspond to the pilot signals of those tracks (S1—S4) on which the head will be situated in the case of a rectilinear motion of the head in a direction which is inclined relative to the recorded track direction, and which corresponds to the direction associated with said deviating speed.

2. An apparatus as claimed in Claim 1, characterized in that at a speed which deviates from the nominal scanning speed the sequence of reference signals is obtained in response to pulses of a first frequency ($f_f$) which corresponds to reproduction with the nominal playing speed and which switches the reference signals in a forward order and additional switching is effected by pulses with a second frequency ($f_c$).

3. An apparatus as claimed in Claim 2, characterized in that the first frequency corresponds to the number of tracks scanned per second at the nominal playing speed.

4. An apparatus as claimed in Claim 3, characterized in that for speeds less than the nominal speed the second frequency switching is effected in a backward order compared with the direction in which switching is effected with the first frequency.

5. An apparatus as claimed in Claim 3, characterized in that for speeds greater than the nominal speed switching forward is effected with the second frequency.

6. An apparatus as claimed in Claim 4, characterized in that it comprises a counter (25) to which counting signals of the said two frequencies are applied.

7. An apparatus as claimed in Claim 4 or 6, characterized in that the apparatus comprise a phase detector (37) for detecting the phase relationship between signals of the first and the second frequency during reproduction with a tape-transport speed equal to zero, in order to control the point where the head each time changes to another track.

8. An apparatus as claimed in Claim 6, characterized in that the apparatus further comprises a variable-frequency oscillator (28) for generating a signal of the second frequency.

9. An apparatus as claimed in Claim 8, characterized in that the variable oscillator, together with the phase detector, is arranged in a phase-locked loop during reproduction with a tape-transport speed equal to zero.

10. An apparatus as claimed in Claim 8 or 9, characterized in that the apparatus comprises a control-signal generator, for example a potentiometer (30), for generating a control signal for the variable oscillator, and the control-signal generator is moreover combined with the tape-transport control loop as a feed-forward control (2).

**Patentansprüche**

1. Anordnung zum Wiedergeben von Videosignalen mittels eines drehbaren Kopfes (10), wobei diese Videosignale zusammen mit Pilotsignalen in parallel zueinander verlaufenden Spuren ($S_1 \ldots S_4$) auf einem Aufzeichnungsträger in Bandform aufgezeichnet sind, welche Spuren in bezug auf die Längsachse des Aufzeichnungsträgers schräg verlaufen, und die Anordnung Spurnachführungsfehlerdetektormittel enthält, zum Detektieren der momentanen Abweichung des Lesekopfes gegen die Mitte einer zu verfolgenden Spur, einen Bezugssignalgenerator (1—7) zum Erzeugen von Bezugssignalen ($f_1 \ldots f_4$ enthält, wobei die Spurnachführungsfehlerdetektormittel ein Bezugssignal mit reproduzierten Pilotsignalen zum Erzeugen eines Spurnachführungsfehlersignals ($V_o$) vergleicht, das eine Maßangabe der Abweichung des Lesekopfes in bezug auf die Mitte der Spur entsprechend dem erzeugten Bezugssignal ist, wobei die Bezugssignale und das Pilotsignal derart gewählt sind, daß eine Spur in Zyklen von wenigstens drei Spuren unterscheidbar ist, und ein Bandtransportsteuerschleife (19, 20) zum Steuern des Bandtransports in Abhängigkeit vom Spurnachführungsfehlersignal enthält, dadurch gekennzeichnet, daß zum Reproduzieren der Information in den Spuren auf dem Aufzeichnungsträger mit einer Geschwindigkeit (V), die vom Nennwert ($V_n$) abweicht, bei der der Lesekopf eine Weg auf dem Aufzeichnungsträger verfolgt, der nicht parallel zu den aufgezeichneten Spuren verläuft, der Bezugssignalgenerator zum Erzeugen einer vorgegebenen Folge von Bezugssignalen ausgelegt ist, wobei die vorgegebene Folge derart gewählt wird, daß die Bezugssignale so geschaltet werden, daß sie ununterbrochen den Pilotsignalen jener Spuren ($S_1 \ldots S_4$) entsprechen, über denen sich der Kopf befindet, wenn er eine geradlinige Bewegung in einer Richtung ausführt, die in bezug auf die Aufzeichnungsspurrichtung schräg verläuft und die der mit der genannten abweichenden Geschwindigkeit übereinstimmenden Richtung entspricht.

2. Anordnung nach Anspruch 1, dadurch gekennzeichnet, daß bei einer von der Abtast-Nenngeschwindigkeit abweichenden Geschwindigkeit die Folge von Bezugssignalen in Beantwortung von Impulsen einer ersten Frequenz $(f_f)$ erhalten wird, die der Wiedergabe auf Wiedergabe-Nenngeschwindigkeit entspricht und die die Bezugssignale in einer Vorwärtsrichtung schaltet, und zusätzliches Schalten mit Impulsen einer zweiten Frequenz $(f_c)$ erfolgt.

3. Anordnung nach Anspruch 2, dadurch gekennzeichnet, daß die erste Frequenz der Anzahl von pro Sekunde abgetasteten Spuren bei der Wiedergabe-Nenngeschwindigkeit entspricht.

4. Anordnung nach Anspruch 3, dadurch gekennzeichnet, daß für niedrigere Geschwindigkeit als die Nenngeschwindigkeit das Schalten mit der zweiten Frequenz in einer Rückwärtsrichtung im Vergleich zur Schaltrichtung mit der ersten Frequenz durchgeführt wird.

5. Anordnung nach Anspruch 3, dadurch gekennzeichnet, daß für höhere Geschwindigkeiten als die Nenngeschwindigkeit das Vorwärtsschalten mit der zweiten Frequenz erfolgt.

6. Anordnung nach Anspruch 4, dadurch gekennzeichnet, daß sie einen Zähler (25) enthält, an den Zählsignale der beiden Frequenzen gelegt werden.

7. Anordnung nach Anspruch 4 oder 6, dadurch gekennzeichnet, daß diese Anordnung einen Phasendetektor (33) zum Detektieren des Phasenverhältnisses zwischen Signalen der ersten und der zweiten Frequenz bei der Wiedergabe mit einer Bandtransportgeschwindigkeit gleich Null enthält, um den Punkt einstellen zu können, an dem der Kopf jeweils die Spur wechselt.

8. Anordnung nach Anspruch 6, dadurch gekennzeichnet, daß diese Anordnung Außerdem einen Durchstimmoszillator (28) zum Erzeugen eines Signals der zweiten Frequenz enthält.

9. Anordnung nach Anspruch 8, dadurch gekennzeichnet, daß der Durchstimmoszillator zusammen mit dem Phasendetektor bei der Wiedergabe mit einer Bandtransportgeschwindigkeit gleich Null in einer Phasenverriegelungsschleife angeordnet ist.

10. Anordnung nach Anspruch 8 oder 9, dadurch gekennzeichnet, daß diese Anordnung einen Steuersignalgenerator enthält, beispielsweise ein Potentiometer (30), zum Erzeugen eines Steuersignals für den Durchstimmoszillator, und daß dieser Steuersignalgenerator außerdem mit der Bandtransportsteuerschleife als Vorwärtstransportsteuerung (3) verknüpft ist.

## Revendications

1. Appareil pour reproduire des signaux vidéo au moyen d'une tête rotative (10), signaux vidéo qui, en combinaison avec des signaux-pilotes ont été enregistrés sur un support d'information en forme de bande, dans des pistes parallèles (S, S4) inclinées par rapport à l'axe longitudinal du support d'information, appareil comportant des moyens de détection d'erreurs de poursuite de piste pour détecter l'écart instantané de la tête de lecture par rapport au centre d'une piste devant être suivie, un générateur (1—7) de signaux de référence (f1—f4), les moyens de détection d'erreurs de poursuite de piste comparant un signal de référence avec des signaux-pilotes reproduits afin d'engendrer un signal d'erreur de poursuite de piste (Vo) qui est une mesure de l'écart de la tête de lecture par rapport au centre de la piste correspondant au signal de référence engendré, lesdits signaux de référence et lesdits signaux-pilotes étant tels qu'une piste peut être distinguée dans des cycles d'au moins trois pistes, et une boucle de réglage de défilement de bande (19, 20) pour régler le défilement de bande en fonction dudit signal d'erreur de poursuite de piste, caractérisé en ce que, pour reproduire l'information dans les pistes sur le support d'information à une vitesse V différente de la vitesse nominale (Vn) et à laquelle la tête de lecture suit sur le support d'information un trajet qui ne s'étend pas parallèlement aux pistes enregistrées, le générateur de signaux de référence est conçu pour engendrer une série prédéterminée de signaux de référence, série prédéterminée qui est choisie de façon que les signaux de référence soient commutés de façon à correspondre continûments à des signaux pilotes des pistes (S1—S4) sur lesquelles la tête est située dans le cas d'un mouvement rectiligne de la tête dans une direction inclinée par rapport à la direction de la piste enregistrée et correspondant à la direction associée à ladite vitesse différente.

2. Appareil selon la revendication 1, caractérisé en ce qu'à une vitesse différente de la vitesse d'exploration nominale, la série de signaux de référence est obtenue en réponse à des impulsions d'une première fréquence (ff) qui correspond à la reproduction à la vitesse de lecture nominale et qui commute les signaux de référence dans un ordre progressif, et une commutation supplémentaire est effectuée par des impulsions d'une seconde fréquence (fc).

3. Appareil selon la revendication 2, caractérisé en ce que la première fréquence correspond au nombre de pistes explorées par seconde à la vitesse de lecture nominale.

4. Appareil selon la revendication 3, caractérisé en ce que, pour des vitesses inférieures à la vitesse nominale, la commutation à la seconde fréquence est effectuée dans un ordre régressif par rapport à la direction dans laquelle est effectuée la commutation à la première fréquence.

5. Appareil selon la revendication 3, caractérisé en ce que, pour des vitesses autres que la vitesse nominale, la commutation dans un ordre progressif est effectuée à la seconde fréquence.

6. Appareil selon la revendication 4, caractérisé en ce qu'il comporte un compteur (25) auquel sont appliqués des signaux de comptage auxdites deux fréquences.

7. Appareil selon la revendication 4 ou 6, caractérisé en ce qu'il comporte un détecteur de phase (37) pour détecter la relation de phase entre des signaux aux première et seconde fréquences au cours de la reproduction à une vitesse de défilement de bande égale à zéro pour permettre de régler le point où la tête change chaque fois de piste.

8. Appareil selon la revendication 6, caractérisé en ce qu'il comporte en outre un oscillateur à fréquence variable (28) pour engendrer un signal à la seconde fréquence.

9. Appareil selon la revendication 8, caractérisé en ce que l'oscillateur variable, conjointement avec le détecteur de phase, est disposé dans une boucle à verrouillage de phase au cours de la reproduction à une vitesse de défilement de bande égale à zéro.

10. Appareil selon la revendication 8 ou 9, caractérisé en ce qu'il comporte un générateur de signaux de réglage, par exemple un potentiomètre (30), pour engendrer un signal de réglage pour l'oscillateur variable, et en ce que le générateur de signaux de réglage est en outre combiné avec la boucle de réglage du défilement de bande comme réglage à action prévisionnelle (2).

FIG.1

FIG.2

FIG.3

FIG.4

FIG.5

FIG.6